# EUROPÄISCHE PATENTSCHRIFT

(11) **EP 2 580 822 B1**
(45) Veröffentlichungstag und Bekanntmachung des Hinweises auf die Patenterteilung: **04.10.2017**
(21) Anmeldenummer: 11715905.3
(22) Anmeldetag: 14.04.2011
(51) Int. Cl.: H01R 13/74, H02K 5/22

(54) **FLUIDDICHTENDER ELEKTROMOTOR-ANSCHLUSSSTECKER, SOWIE MOTOR**
FLUID TIGHT CONNECTOR FOR ELECTRICAL MOTOR AND ELECTRICAL MOTOR
CONNECTEUR ÉTANCHE POUR MOTEUR ELECTRIQUE ET MOTEUR ELECTRIQUE

(30) Priorität: 11.06.2010 DE 102010029982
(43) Veröffentlichungstag der Anmeldung: 17.04.2013
(73) Patentinhaber: Robert Bosch GmbH, 70442 Stuttgart (DE)
(72) Erfinder: BITZER, Harold, 77815 Buehl (DE); KLINGENFUSS, Katja, 75045 Walzbachtal (DE)
(86) Internationale Anmeldenummer: PCT/EP2011/055873
(87) Internationale Veröffentlichungsnummer: WO 2011/154181

(56) Entgegenhaltungen:
- EP-A1- 1 659 673
- EP-A1- 1 870 599
- FR-A1- 2 906 411
- JP-A- 57 003 548
- US-B1- 7 547 230

## Beschreibung

Die Erfindung betrifft einen fluiddichtenden Elektromotor-Anschlussstecker für ein Gehäuse eines Elektromotors, insbesondere eines Elektromotors eines Motorkühlungsgebläses oder eines ABS/ESP eines Kraftfahrzeugs. Ferner betrifft die Erfindung einen Motor, insbesondere einen Elektromotor für ein Motorkühlungsgebläse oder ein ABS/ESP eines Kraftfahrzeugs, oder ein konfektioniertes elektrisches Kabel für einen solchen Motor.

### Stand der Technik

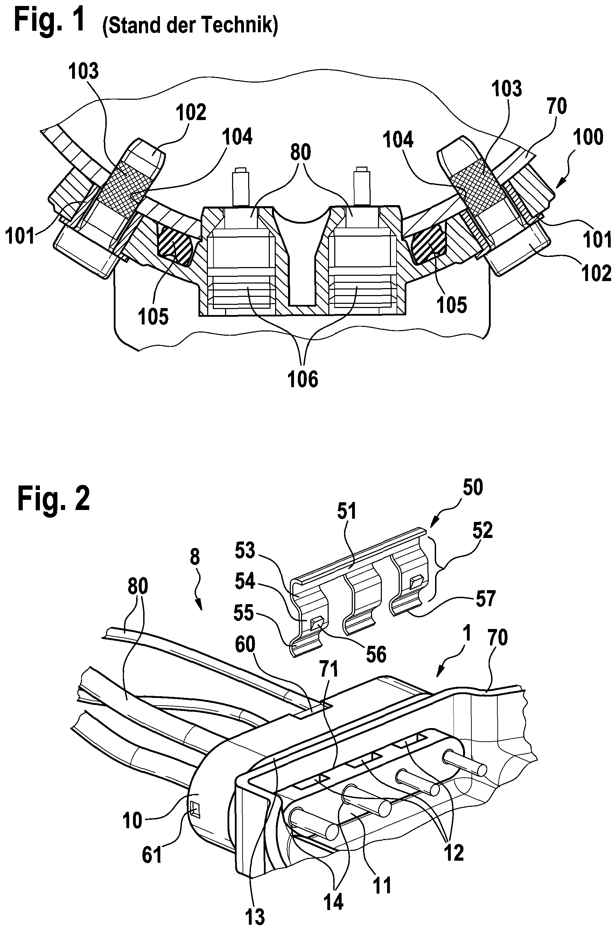

Aus Kostengründen werden bei einer Herstellung von Elektromotoren, insbesondere von Gleichstrommotoren, für deren Gehäuse Tiefziehteile eingesetzt. Bei diversen Anwendungen, wie z. B. bei Motorkühlungsgebläsen und/oder im ABS/ESP-Bereich von Kraftfahrzeugen, müssen solche Elektromotoren fluidgedichtet sein, d. h. auch, dass elektrische Steuer- und Versorgungsleitungen über einen Dichtflansch fluidgedichtet in den Elektromotor hineingeführt sein müssen. Die Fig. 1 der Zeichnung zeigt einen solchen Dichtflansch 100 gemäß dem Stand der Technik, wobei der Dichtflansch 100 selbst über eine Axialdichtung 105, und jeweils eine elektrische Leitung 80 über eine Radialdichtung 106 fluidgedichtet gegenüber dem Gehäuse 70 ist.

Eine auch im Folgenden verwendete Nomenklatur der Dichtungen, ergibt sich aus einer mechanischen Belastung der Dichtung, d. h. eine mechanisch axial belastete Dichtung wird als Axialdichtung und eine mechanisch radial belastete Dichtung wird als Radialdichtung bezeichnet. Die Dichtungen können allerdings auch nach einem Verlauf ihrer Dichtfunktion bezeichnet sein, wobei sich dann die Bezeichnungen vertauschen, d. h. eine Axialdichtung wird dann als Radialdichtung und eine Radialdichtung als Axialdichtung bezeichnet.

Der Dichtflansch 100 gemäß dem Stand der Technik ist mittels selbstfurchenden bzw. selbstschneidenden Schrauben 102 am Gehäuse 70 festgelegt, wobei sich die Schrauben 102 über Stahlhülsen 101 abstützen müssen, um einem Setzverhalten des Dichtflanschs 100 vorzubeugen, der aus einem vergleichsweise weichen Kunststoffmaterial hergestellt ist. Ferner weisen die Schrauben 102 im Bereich ihrer Schraublöcher 104 im Gehäuse 70 eine Mikroverkapselung 103 auf, wodurch diese gegenüber dem Gehäuse 70 ebenfalls fluidgedichtet sind. Durch die Mikroverkapselung 103 kann der Dichtflansch 100 nur unter Aufbrechen der Mikroverkapselung 103 wieder vom Gehäuse 70 abgenommen werden; d. h. der Dichtflansch 100 verbleibt in einem Reparaturfall nach Möglichkeit am Gehäuse 70, weil ansonsten die Mikroverkapselung 103 erneut eingerichtet werden muss.

Die für die axiale Anpressung des Dichtflanschs 100 notwendige Verschraubung ist aufwändig und vergleichsweise kostenintensiv, da zusätzliche Schraublöcher 104 vorsehen werden und diese mittels spezieller Schrauben 102 abgedichtet werden müssen. Ferner ist der Schraubprozess vergleichsweise aufwändig, wobei mikroverkapselte Schrauben 102 teuer sind und deren Dichtheit (ca. 2.000ppm) im Serienprozess nicht immer gewährleistet ist. Beim Furchprozess der Schrauben 102 entstehen Späne die in ein Inneres des Gehäuses 70 eindringen können, was später im Betrieb des Motors oder auf einer Leiterplatte Schäden anrichten kann, die zu einem Ausfall des gesamten Motors führen können. Des Weiteren ist ein Stoffeinsatz durch einen Anschraubbereich des Dichtflanschs erhöht.

Die FR 2 906 411 offenbart eine Anschlussbuchse, die eine elektrische Verbindung mittels eines Steckers ermöglicht. Die Anschlussbuchse weist einen Bund auf, der es ermöglicht die Anschlussbuchse zusammen mit einem u-förmigen Element innerhalb einer Ausnehmung einer Wandung zu arretieren.

Die EP 1 870 599 A1 offenbart eine Strömungsmaschine mit einem Anschlussstück, das eine einzelne elektrische Leitung aus einem Gehäuse herausführt. Die Arretierung des Anschlussstücks innerhalb einer Ausnehmung des Gehäuses erfolgt mittels Rasthaken.

### Aufgabenstellung

Es ist eine Aufgabe der Erfindung, einen verbesserten fluiddichten Anschluss, insbesondere einen verbesserten fluiddichten elektrischen Anschluss, an einem Motor, insbesondere einem Elektromotor, anzugeben. Hierbei soll der Anschluss einfacher als ein herkömmlicher Dichtflansch zu handhaben sein, wobei der Anschluss einfach und ohne Beschädigung eines Bestandteils des Dichtflanschs bzw. dessen Befestigung am Gehäuse, vom Gehäuse wieder abnehmbar sein soll. Ferner soll der Anschluss preiswert sein und mit weniger Komponenten als im Stand der Technik auskommen. Des Weiteren soll für eine Fluiddichtung des Anschlusses wenig vergleichsweise kostenintensives Dichtmaterial verwendet werden müssen.

### Offenbarung der Erfindung

Die Aufgabe der Erfindung wird mittels einem fluiddichtenden Elektromotor-Anschlussstecker für ein Gehäuse eines Elektromotors, insbesondere eines Elektromotors eines Motorkühlungsgebläses oder eines ABS/ESP eines Kraftfahrzeugs, gemäß Anspruch 1; und einem Motor, insbesondere einem Elektromotor für ein Motorkühlungsgebläse oder ein ABS/ESP eines Kraftfahrzeugs, oder einem konfektionierten elektrischen Kabel für einen Motor, insbesondere einen Elektromotor, gemäß Anspruch 8 gelöst. Vorteilhafte Weiterbildungen der Erfindung ergeben sich aus den abhängigen Ansprüchen.

Gemäß der Erfindung wird ein Anschlussstecker für die Leitungen zur Verfügung gestellt, der einfach und bequem am Gehäuse festlegbar und auch einfach wieder vom Gehäuse entnehmbar ist. Der erfindungsgemäße fluiddichtende Anschlussstecker weist ein an das Gehäuse ansteckbares Steckergehäuse auf, mittels welchem wenigstens eine elektrische Leitung fluidgedichtet gegenüber dem Motor mit diesem verbindbar ist. Das Steckergehäuse ist mittels einer Verriegelungsfeder festlegbar, wodurch der fluiddichtende Anschlussstecker einfach wieder lösbar am Gehäuse befestigbar ist.

Die Erfindung erlaubt es mit weniger und preiswerteren Komponenten als im Stand der Technik auszukommen, wobei bei einem geringeren Invest für Montageeinrichtungen ein fluiddichterer Anschluss für den Motor zur Verfügung gestellt wird. Im Vergleich mit dem ersten eingangs erläuterten Stand der Technik entfallen wenigstens zwei mikroverkapselte Schrauben, was zur Folge hat, dass das Dichtheitsproblem im Schraubenbereich des Dichtflanschs eliminiert ist und keine Spanbildung durch ein Eindrehen bzw. -schneiden der Schrauben ins Gehäuse entsteht. Dies ist bei einem Motor mit einer Leiterplatte von Vorteil, insbesondere dann wenn die Leiterplatte SMD-Bauteile (SMD = surface-mounted device, dt. oberflächenmontiertes Bauelement) aufweist. Ferner entfallen wenigstens zwei Stahlhülsen, welche in den Dichtflansch eingepasst werden müssen.

Hierbei kann der Anschlussstecker für eine Fluiddichtung der betreffenden elektrischen Leitung und/oder des Anschlusssteckers gegenüber dem Gehäuse, eine Radialdichtung und eine Axialdichtung, oder eine bevorzugt stofflich einstückige Dichteinheit, die eine axiale und radiale Fluiddichtung der Leitung und/oder des Anschlusssteckers gegenüber dem Gehäuse gewährleistet, aufweisen.

Erfindungsgemäß weist das Steckergehäuse des Anschlusssteckers einen Montageabschnitt auf, mittels welchem der Anschlussstecker am Gehäuse Motors festlegbar ist. Der bevorzugt im Wesentlichen quaderförmige Montageabschnitt ist dabei durch eine Ausnehmung im Gehäuse nach innen in das Gehäuse hinein steckbar und derart ausgebildet, dass der Anschlussstecker innen im Gehäuse arretierbar ist.

Erfindungsgemäß weist der Montageabschnitt eine, bevorzugt als eine Durchgangsausnehmung ausgebildete Verriegelungsausnehmung auf, in welche die Verriegelungsfeder für eine Montage des Anschlusssteckers am Gehäuse derart einsteckbar ist, dass eine Wandung des Gehäuses zwischen der Verriegelungsfeder und einem Absatz des Steckergehäuse einklemmbar ist.

Es ist bevorzugt, dass die Verriegelungsfeder wenigstens einen Federabschnitt aufweist, der insbesondere als, bevorzugt bogenförmige, Federlasche ausgebildet ist.

Der jeweilige Federabschnitt der Verriegelungsfeder ist dabei in eine betreffende Verriegelungsausnehmung des Montageabschnitts derart einsteckbar, dass ein Längsendabschnitt des Federabschnitts am Gehäuse und ein Mittenabschnitt des Federabschnitts innen am Montageabschnitt ansitzt. Hierbei ist der Montageabschnitt bevorzugt derart ausgebildet, dass die Verriegelungsfeder mit ihrem jeweiligen Federabschnitt innerhalb des Gehäuses in die betreffende Verriegelungsausnehmung einsteckbar ist.

Erfindungsgemäß ist eine betreffende Verriegelungsausnehmung des Montageabschnitts eine Durchgangsausnehmung.

In einer bevorzugten Ausführungsform der Erfindung ist die Verriegelungsfeder derart ausgebildet, dass sie im Verriegelungszustand im Montageabschnitt mit ihren beiden Längsendabschnitten am Gehäuse abstützbar ist. In Ausführungsformen der Erfindung sitzt in einem Verriegelungszustand der Verriegelungsfeder, in der Verriegelungsausnehmung eine Arretiereinrichtung der Verriegelungsfeder verriegelnd an einer Arretiereinrichtung in der Verriegelungsausnehmung an. Hierbei ist die Arretiereinrichtung der Verriegelungsfeder bevorzugt als eine Arretierlasche oder ein Arretiervorsprung, und die Arretiereinrichtung der Verriegelungsausnehmung bevorzugt als eine Arretierausnehmung bzw. eine Arretierschulter ausgebildet.

In Ausführungsformen der Erfindung kann das Steckergehäuse derart konzipiert sein, dass eine Dichteinheit, z. B. eine kombinierte Axial-/Radialdichtung, zwischen dem Steckergehäuse und einer Seite des Gehäuses, insbesondere einer Außenseite des Gehäuses, montierbar ist. Ferner kann das Steckergehäuse derart konzipiert sein, dass eine Radialdichtung oder eine insbesondere als eine Mattendichtung ausgebildete Radialdichtung im Steckergehäuse aufgenommen ist, wobei dann die Radialdichtung mittels einer bevorzugt als Fixierplatte ausgebildeten Fixiereinrichtung im Steckergehäuse montiert ist.

In Ausführungsformen der Erfindung kann die Axialdichtung am Absatz des Anschlusssteckers außerhalb des Montageabschnitts vollständig um den Montageabschnitt umlaufend vorgesehen sein. Ferner kann die betreffende Radialdichtung innerhalb des Steckergehäuses vorgesehen sein, wobei sie die betreffende elektrische Leitung gegenüber dem Steckergehäuse fluiddichtet. Das Steckergehäuse kann eine Mehrzahl von Durchgangsausnehmungen aufweisen, durch welche die elektrischen Leitungen hindurch erstreckbar sind. Ferner kann der Montageabschnitt als eine Mehrzahl von Domen ausgebildet sein, die durch eine Mehrzahl von Durchgangsausnehmungen im Gehäuse hindurch steckbar sind; die Verriegelungsfeder ist dann durch Ausnehmungen in den Domen in diese einsteckbar, insbesondere durch diese hindurch steckbar.

### Kurzbeschreibung der Figuren

Die Erfindung wird im Folgenden anhand von Ausführungsbeispielen unter Bezugnahme auf die beigefügte detaillierte Zeichnung näher erläutert. In der Zeichnung zeigen:
- Fig. 1: eine geschnittene Draufsicht auf einen Dichtflansch gemäß dem Stand der Technik an einem Gehäuse eines Elektromotors für eine elektrische Versorgungs- oder Steuerleitung des Elektromotors;
- Fig. 2: eine Perspektivansicht von oben und vorne auf eine erste Variante eines erfindungsgemäßen fluiddichtenden Elektromotor-Anschlusssteckers bei dessen Montage an einem Gehäuse eines Elektromotors;
- Fig. 3: eine im Bereich seiner Verriegelung am Elektromotor seitlich geschnittene Perspektivansicht des Anschlusssteckers aus Fig. 2 in einem montierten Zustand;
- Fig. 4: eine dreidimensionale Darstellung einer Verriegelungsfeder für den Anschlussstecker;
- Fig. 5: eine Perspektivansicht des Anschlusssteckers analog Fig. 2, die den Anschlussstecker in einem Montagezustand darstellt, wobei eine Kontaktierung des Elektromotors mit elektrischen Leitungen hergestellt ist;
- Fig. 6: eine Perspektivansicht von vorne und unten auf den Anschlussstecker im Montagezustand, wobei das Gehäuse bzw. der Elektromotor der Übersichtlichkeit halber weggelassen ist;
- Fig. 7: eine erste Ausführungsform der ersten Variante des erfindungsgemäßen Anschlusssteckers in einer dreidimensionalen Explosionsansicht von oben und hinten;
- Fig. 8: eine zweite Ausführungsform der ersten Variante des erfindungsgemäßen Anschlusssteckers ebenfalls in einer dreidimensionalen Explosionsansicht von oben und hinten;
- Fig. 9: eine Perspektivansicht von oben und vorne auf eine zweite Variante des erfindungsgemäßen fluiddichtenden Elektromotor-Anschlusssteckers in einem Montagezustand an einem Gehäuse eines Elektromotors;
- Fig. 10: eine Perspektivansicht von unten und hinten auf den montierten Anschlussstecker aus der Fig. 9;
- Fig. 11: eine dreidimensionale Explosionsansicht von oben und vorne auf den Anschlussstecker bei dessen Montage am Gehäuse des Elektromotors;
- Fig. 12: eine dreidimensionale Explosionsansicht von oben und hinten auf den Anschlussstecker bei dessen Montage am Gehäuse;
- Fig. 13: eine Schnittansicht durch den montierten Anschlussstecker im Bereich seiner Verriegelung am Gehäuse; und
- Fig. 14: eine Schnittansicht analog Fig. 13 jedoch geschnitten im Bereich einer durch den Anschlussstecker hindurch geführten elektrischen Leitung.

### Ausführungsformen der Erfindung

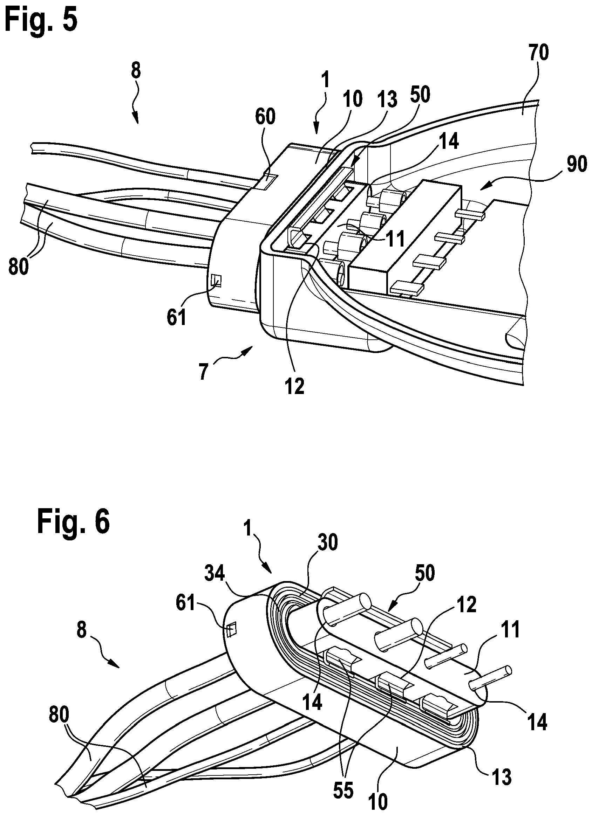

Im Folgenden wird zunächst mit Bezug auf die Fig. 2 bis 8 der Zeichnung die erste Variante des erfindungsgemäßen fluiddichtenden Elektromotor-Anschlusssteckers 1 anhand von zwei Ausführungsformen erläutert. - Der Anschlussstecker 1 weist ein Steckergehäuse 10 auf, mittels welchem er an einem Gehäuse 70, z. B. einem Polgehäuse 70, eines Elektromotors 7 befestigbar ist. Durch den Anschlussstecker 1 hindurch ist wenigstens eine elektrische Leitung 80 bzw. wenigstens ein elektrisches Kabel 80 in das Innere des Elektromotors geführt, die bzw. das dann mit einem elektrischen Leiter innen im Elektromotor 7 elektrisch angeschlossen ist (siehe Fig. 5). Die am Anschlussstecker 1 vorgesehenen elektrischen Leitungen 80 zusammen mit dem Anschlussstecker 1 bilden hierbei ein konfektioniertes elektrisches Kabel 8 bzw. einen Kabelstrang 8.

Das Steckergehäuse 10 ist im Wesentlichen quaderförmig, mit bevorzugt abgerundeten Seitenwänden, aufgebaut und besitzt an dessen Vorderseite einen Montageabschnitt 11, wobei am Steckergehäuse 10 im Übergang zu dessen Montageabschnitt 11 ein Absatz 13 ausgebildet ist, mittels welchem der Anschlussstecker 1 am Gehäuse 70 ansetzbar ist. Der Montageabschnitt 11 ragt dann in einem solchen Zustand - einem Montagezustand des Anschlusssteckers 1 am Gehäuse 70 - durch eine Durchgangsausnehmung 71 im Gehäuse 70 nach innen in das Gehäuse 70 hinein. Hierbei ist es bevorzugt, dass der Anschlussstecker 1 innen im Gehäuse 70 verriegelt ist, wobei die Verriegelung zusammen mit dem Absatz 13, eine Wandung des Gehäuses 70 dazwischen einklemmt; aber auch eine, ggf. zusätzliche, äußere Verriegelung des Steckergehäuses 10 am Gehäuse 70 ist anwendbar.

Eine solche Verriegelung kann z. B. mittels am Montageabschnitt 11 ausgebildeten Rasteinrichtungen, z. B. Rasthaken, erfolgen, die innen im Gehäuse 70 an geeigneten Rasteinrichtungen verrasten; dies kann z. B. eine Innenwand des Gehäuses 70 sein (in der Zeichnung nicht dargestellt). Ferner können Rasteinrichtungen, z. B. Rastlaschen oder Rastausnehmungen, derart am Steckergehäuse 10 vorgesehen oder ausgebildet sein, dass diese mit Rasteinrichtungen, z. B. Rastausnehmungen oder Rasthaken, außen am Gehäuse 70 verrasten (in der Zeichnung ebenfalls nicht dargestellt). Ferner ist eine Verriegelung mittels einer Verriegelungs- 50 oder Sicherungsfeder 50 möglich, die den Absatz 13 des Steckergehäuses 10 gegen die Außenwand des Gehäuses 70 zieht, was nachfolgend näher erläutert wird.

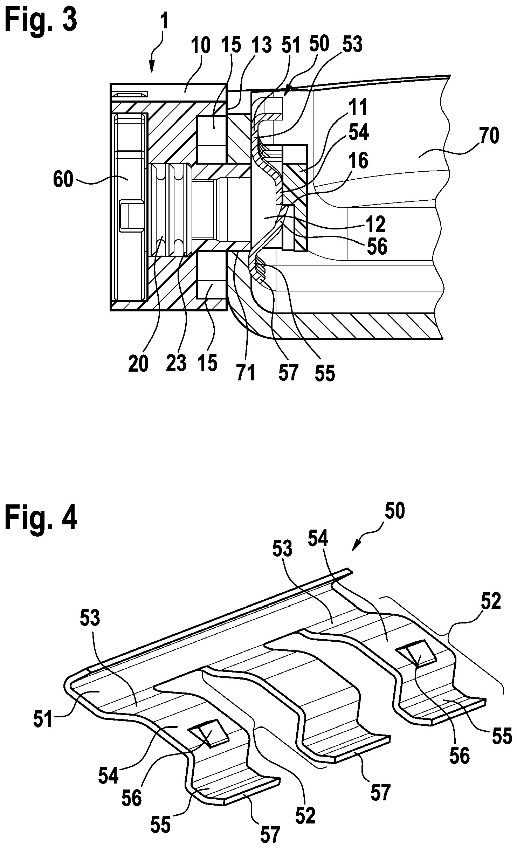

Eine solche bevorzugt stofflich einstückige, aus einem Blech gestanzte Verriegelungsfeder 50 ist in der Fig. 4 näher dargestellt, wobei die Verriegelungsfeder 50 bevorzugt drei insbesondere als Federlaschen 52 ausgebildete Federabschnitte 52 an einem Steg 51 ausgebildet aufweist. Die Anzahl der Federabschnitte 52 ist natürlich beliebig, die Anzahl davon soll lediglich zu einer Anzahl von Verriegelungsausnehmungen 12 im Montageabschnitt 11 korrespondieren. Ein jeweiliger Federabschnitt 52 ist bevorzugt bogenförmig ausgebildet und stellt eine Federkraft senkrecht zu seiner flächigen Erstreckung zur Verfügung.

Der jeweilige Federabschnitt 52 ist mit einem gebundenen Längsendabschnitt 53 mit dem Steg 51 verbunden, erhebt sich dann in Richtung eines freien Endes 57 flächig aus einer Ebene des Stegs 51 in Richtung seines Mittenabschnitts 54, um dann wieder in Richtung eines freien Längsendabschnitts 55 in die Ebene des gebundenen Längsendabschnitts 53 zurück zufallen. Das freie Ende 57 des jeweiligen Federabschnitts 52 ist wiederum in dieselbe Richtung wie der Mittenabschnitt 54 hochgebogen, um ein Stecken der Verriegelungsfeder 50 zu erleichtern.

Bevorzugt im Mittenabschnitt 54 des jeweiligen Federabschnitts 52 ist eine insbesondere als eine Arretierlasche 56 oder als ein Arretiervorsprung 56 ausgebildete Arretiereinrichtung 56 vorgesehen, mittels welcher ein betreffender Federabschnitt 52 bzw. die Verriegelungsfeder 50 in einer betreffenden Verriegelungsausnehmung 12 im Montageabschnitt 11 verrasten kann, wodurch die Verriegelungsfeder 50 an einem Herausgleiten aus den betreffenden Verriegelungsausnehmungen 12 gehindert ist. Bevorzugt weisen nur die beiden äußeren Federabschnitte 52 daran ausgebildete Arretiereinrichtungen 56 auf. Eine Arretiereinrichtung 56 greift dabei im Montagezustand der Verriegelungsfeder 50 im/am Montageabschnitt 11 in eine bevorzugt als eine Arretierausnehmung 16 ausgebildete bzw. an einer bevorzugt als Arretierschulter 16 ausgebildete Arretiereinrichtung 16 ein bzw. an, wobei die Arretiereinrichtung 16 in einer betreffenden Verriegelungsausnehmung 12 vorgesehen ist (siehe Fig. 3).

Der Montagezustand des Anschlusssteckers 1 am Gehäuse 70 ist ferner in der Fig. 5 gut zu erkennen, wobei die Verriegelungsfeder 50 mit einem jeden ihrer Federabschnitte 52 in eine dazu korrespondierende Verriegelungsausnehmung 12 des Montageabschnitts 11 eingesteckt ist. Hierbei stehen die korrespondierenden Verriegelungsausnehmungen 12 nach innen in das Gehäuse 70 vor. Im Montagezustand liegen die betreffenden beiden Längsendabschnitte 53, 55 der Verriegelungsfeder 50 innen am Gehäuse 70 an, wohingegen der betreffende Mittenabschnitt 54 innen an der jeweiligen Verriegelungsausnehmung 12 anliegt und dabei den Montageabschnitt 11 und somit das Steckergehäuse 10 in Richtung auf das Innere des Gehäuses 70 vorspannt, d. h. eine Axialdichtung 30 (siehe unten) axial belastet. D. h. der betreffende Mittenabschnitt 54 der Federabschnitte 52 liegt an einer einem freien Ende des Montageabschnitts 11 direkt benachbarten Begrenzung der betreffenden Verriegelungsausnehmung 12 an.

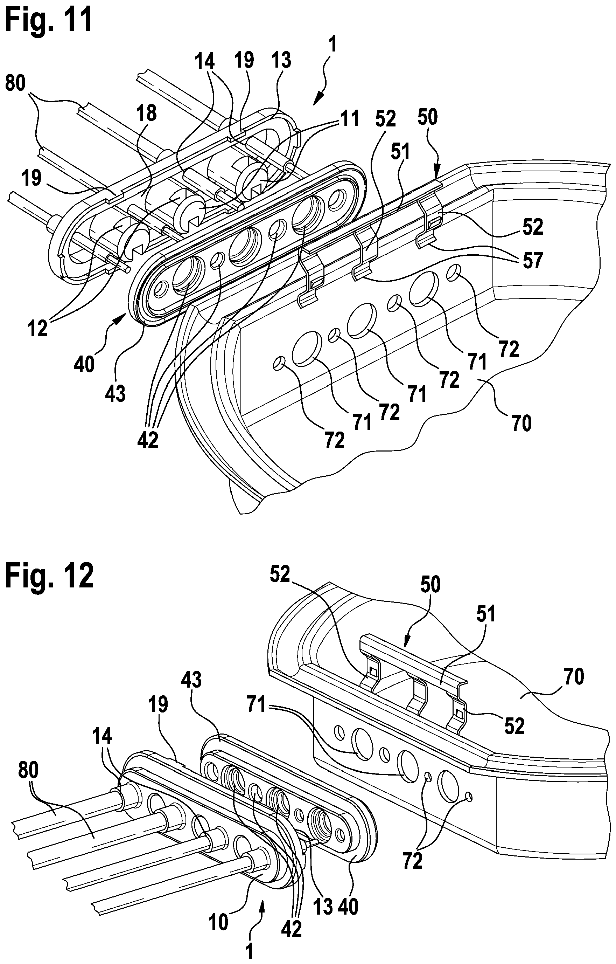

Für eine Fluiddichtung des Anschlusssteckers 1 gegenüber dem Gehäuse 70 weist der Anschlussstecker 1 bevorzugt in einer Nut 15 des Steckergehäuses 10 die Axialdichtung 30 auf (siehe Fig. 6). Hierbei ist die Nut 15 in den Absatz 13 eingearbeitet (siehe Fig. 3) und läuft bevorzugt vollständig um den vom Absatz 13 abstehenden Montageabschnitt 11 herum. Außerhalb der Nut 15 können Vorsprünge 19 (siehe die zweite Variante der Erfindung, Fig. 11 und 12) am Absatz 13 vorgesehen sein, die einen maximalen axialen Kompressionsweg der Axialdichtung 30 begrenzen. Im Montagezustand zieht die Verriegelungsfeder 50 die Axialdichtung 30 mit ihrem Dichtabschnitt 34 gegen eine Außenseite des Gehäuses 70, wodurch das Steckergehäuse 10 nach außen gegenüber dem Gehäuse 70 fluidgedichtet ist.

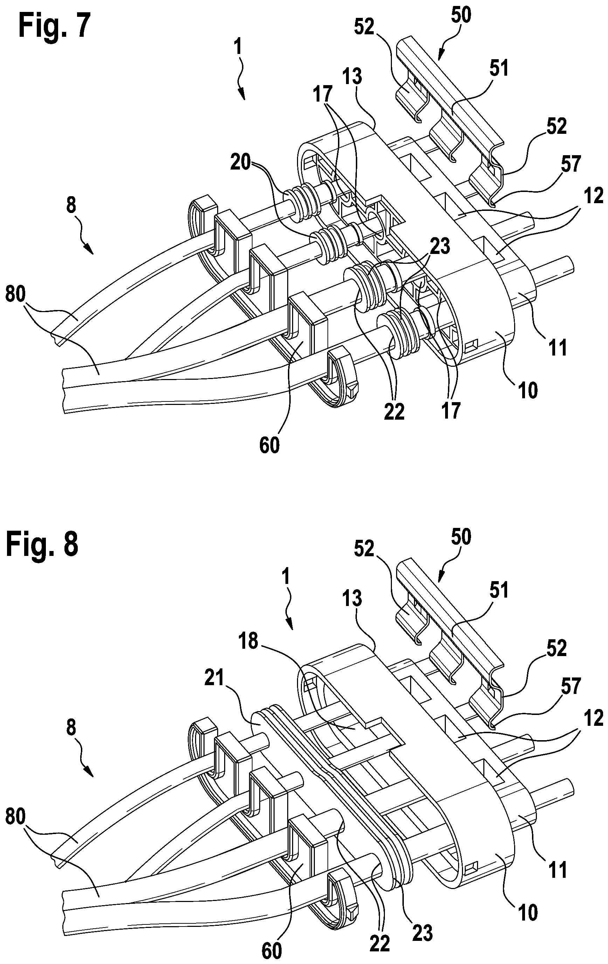

Ferner weist der Anschlussstecker 1 eine Radialdichtung 20, 21 auf (siehe Fig. 7 und 8), die mittels eines inneren Dichtabschnitts 22 gegenüber einer oder der betreffenden elektrischen Leitung 80, und mittels eines äußeren Dichtabschnitts 23 gegenüber dem Steckergehäuse 10 fluiddichtet. Hierbei ergeben sich zwei Ausführungsformen. In der in der Fig. 7 dargestellten ersten Ausführungsform ist eine jede elektrische Leitung 80 einzeln gedichtet, wofür das Steckergehäuse 10 über jeweils eine Einzelaufnahme 17 verfügt. In der in der Fig. 8 dargestellten zweiten Ausführungsform der ersten Variante sind eine Mehrzahl, und insbesondere alle elektrischen Leitungen 80 mit einer einzigen, bevorzugt als eine Mattendichtung 21 ausgebildeten Radialdichtung 21 gedichtet, wofür das Steckergehäuse 10 eine flächenmäßig vergleichsweise hintere Aufnahme 18 aufweist.

Sowohl die einzelnen Radialdichtungen 20 als auch die Mattendichtung 21 werden von einer Fixiereinrichtung 60 in Position gehalten, die am Steckergehäuse 10 befestigbar, insbesondere mittels einer Verratung 61 festlegbar ist. Ferner weist das Steckergehäuse 10 Durchgangsausnehmungen 14 für die elektrischen Leitungen 80 auf, wobei die Leitungen 80 zusätzlich am/im Steckergehäuse 10 festgelegt sein können; es ist jedoch auch möglich, die Leitungen 80 lediglich durch das Steckergehäuse 10 hindurch zu führen, ohne diese am Steckergehäuse 10 festzulegen. Innerhalb des Gehäuses 70 sind die Leitungen 80 an elektrische Anschlusseinrichtungen 90 anschließbar, wobei die Leitungen 80 den Elektromotor 7 mit elektrischer Leistung für eine Drehmomenterzeugung versorgen und/oder Steuersignale an diesen übermitteln bzw. Signale aus diesem herausführen.

Ferner kann über eine Dicke und auch ein Material der Verriegelungsfeder 50 ein zulässiger Verformungsgrad und auch ein Setzverhalten der Dichtlippen der Axialdichtung 30 relativ genau eingestellt werden. Ferner gleicht die Verriegelungsfeder 50 eine Relaxation eines Materials der Axialdichtung 30 aus, sodass dauerhaft eine Fluiddichtung gewährleistet ist. Die Verriegelungsfeder 50 ist dabei derart konzipiert, dass sie das Steckergehäuse 10 axial auch bei Schüttelbeanspruchung sicher am Gehäuse 70n hält. Hierbei kann der erfindungsgemäße Anschlussstecker 1 z. B. bei EC- und DC-Motoren eingesetzt werden.

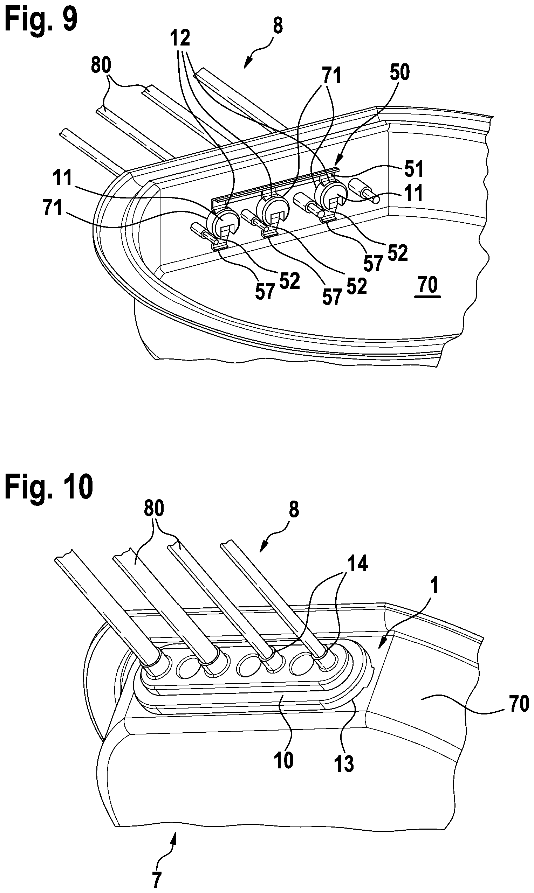

Im Folgenden wird mit Bezug auf die Fig. 9 bis 14 der Zeichnung die zweite Variante des erfindungsgemäßen fluiddichtenden Elektromotor-Anschlusssteckers 1 anhand einer Ausführungsform erläutert. Hierbei wird nur auf die von der ersten Variante der Erfindung abweichenden Merkmale eingegangen. D. h. dass Merkmale der ersten Variante auf die zweite Variante der Erfindung übertragbar sind; ferner ist es möglich, die Merkmale der zweiten Variante auf die erste Variante der Erfindung zu übertragen. - Gemäß der zweiten Variante werden die beiden separaten radial (Axialdichtung 30) und axial dichtenden Komponenten (Radialdichtung 20, 21) der ersten Variante in einer Dichteinheit 40 zusammengesetzt, die eine kombinierte Axial-/Radialdichtung 40 ist und als eine Mattendichtung 40 ausgeformt sein kann. Ein innerer Dichtabschnitt 42 übernimmt dabei die Funktion der obigen Radialdichtung 20 und ein äußerer Dichtabschnitt 43 die Funktion der obigen Axialdichtung 30.

Neben geringeren Materialkosten für die Dichteinheit 40 wird auch eine Montagezeit reduziert, ohne dass ein Abdichtverhalten des Anschlusssteckers 1 beeinträchtigt ist. Gegenüber der obigen Ausführungsform ist der Montageabschnitt 11 nicht mehr im Wesentlichen quaderförmig, sondern als einer oder eine Mehrzahl von bevorzugt zylinderförmigen Domen 11 ausgebildet. Hierbei wird für die Montage des Anschlusssteckers 1 am Gehäuse 70 ein Längsendabschnitt eines jeweiliges Doms 11 durch eine separate Durchgangsausnehmung 71 im Gehäuse 70 in dieses vorbewegt.

Ferner weist das Gehäuse 70 benachbart zu den Durchgangsausnehmungen 71 für die Dome 11, Durchgangsausnehmungen 72 für die elektrischen Leitungen 80 auf. Bevorzugt sind zwischen vier elektrischen Leitungen 80 drei zylindrische Dome 11 am Steckergehäuse 10 ausgebildet. Für eine Verriegelung des Steckergehäuses 10 am Gehäuse 70 weisen die Dome 11 analog zur ersten Variante der Erfindung an ihrem jeweils freien Längsendabschnitt eine Verriegelungsausnehmung 12 auf, in welche die Verriegelungsfeder 50 verriegelnd einsteckbar ist; was analog zur ersten Variante der Erfindung erfolgt.

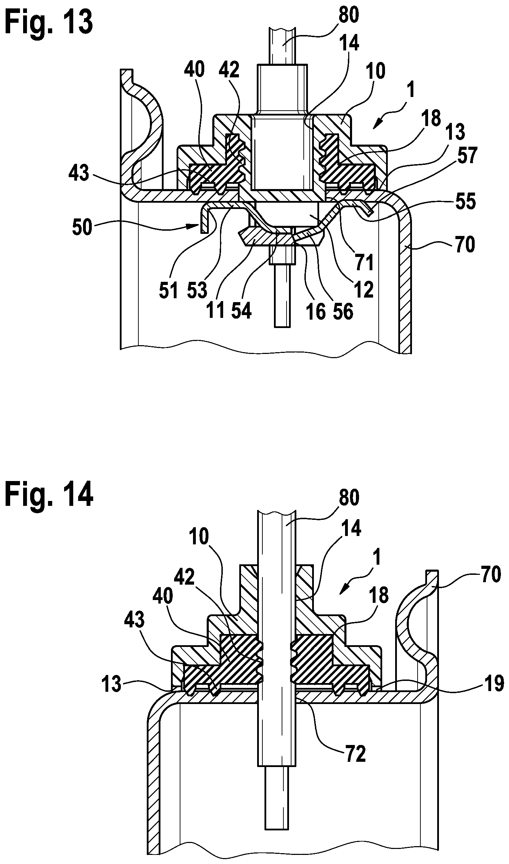

Die Dichteinheit 40 ist in einer vorderen Aufnahme 18 des Steckergehäuses 10 aufgenommen, bzw. bei der Montage des Anschlusssteckers 1 am Gehäuse 70 aufnehmbar, wobei die Dichteinheit 40 zwischen dem Gehäuse 70 und dem Steckergehäuse 10 eingeklemmt wird. Hierbei liegt der äußere Dichtabschnitt 43 am Gehäuse 70 an und dichtet das Steckergehäuse 10 gegenüber dem Gehäuse 70. Die inneren Dichtabschnitte 42 dichten die elektrischen Leitungen 80 und die Dome 11 gegenüber dem Gehäuse 70. Ferner sind die Dome 11 selbst fluiddicht, da die Dome 11 hinter der eingesteckten Verriegelungsfeder 50 innen geschlossen sind (siehe Fig. 13), sodass durch die teilweise hohlen Dome 11 keine Flüssigkeit in das Innere des Gehäuses 70 gelangen kann. Hierbei dienen die Dome 11 einerseits einer Befestigung des Anschlusssteckers 1 am Gehäuse 70 und andererseits einer Einsparung des Materials der Dichteinheit 30.

Die Dichteinheit 40 ist bevorzugt derart konzipiert (siehe Fig. 13 und 14), dass der innere Dichtabschnitt 42 gegenüber dem äußeren Dichtabschnitt 43 abgesetzt ist, wodurch Dichtungsmaterial eingespart ist. D. h. die Dichteinheit 40 ist im Bereich der Durchgangsausnehmungen 71, 72 für die Dome 11 und die elektrischen Leitungen 80 in einem Querschnitt dicker als an anderen Stellen, insbesondere einer Peripherie, an welcher sich bevorzugt der äußere Dichtabschnitt 43 der Dichteinheit 40 befindet. Bevorzugt ist die Dichteinheit 40 mit ihren Dichtabschnitten 42, 43 stofflich einstückig ausgebildet; es ist jedoch möglich, die Dichtabschnitte 42, 43 an einem Grundkörper der Dichteinheit 40 vorzusehen, insbesondere an diesen zu kleben, um weiteres Dichtungsmaterial einzusparen, da in einem solchen Fall bevorzugt nur die Dichtabschnitte 42, 43 aus Dichtungsmaterial ausgebildet sind.

Ferner ist es bei beiden Varianten der Erfindung möglich, einen Deckel oder ein anderes Gehäuseteil des Elektromotors 7 (beides in der Zeichnung nicht dargestellt), welcher bzw. welches z. B. das Gehäuse 70 verschließt, in seinem bzw. in dessen Montagezustand am Gehäuse 70 in einem zur Verriegelungsfeder 50 benachbarten Abschnitt derart auszubilden, dass z. B. ein Vorsprung, die Verriegelungsfeder 50 in ihrer Montageposition hält. Dies kann auch auf das Gehäuse 70 übertragen sein, welches innen an einem entsprechenden Bereich einen Vorsprung oder eine Ausnehmung aufweist, welcher bzw. welche die Verriegelungsfeder 50 dann in ihrer Montageposition hält. Für den Fall einer Ausnehmung im Gehäuse 70 greift dann die Verriegelungsfeder 50 mit einem Vorsprung in diese ein.

## Patentansprüche

1. Fluiddichtender Elektromotor-Anschlussstecker für ein Gehäuse (70) eines Elektromotors (7), insbesondere eines Elektromotors (7) eines Motorkühlungsgebläses oder eines ABS/ESP eines Kraftfahrzeugs, mit
einem außen an das Gehäuse (70) ansteckbaren Steckergehäuse (10), mittels welchem wenigstens eine elektrische Leitung (80) fluidgedichtet gegenüber dem Elektromotor (7) mit diesem verbindbar ist,
wobei das Steckergehäuse (10) mittels einer Verriegelungsfeder (50) am Gehäuse (70) festlegbar ist, wodurch der fluiddichtende Elektromotor-Anschlussstecker (1) wieder lösbar am Gehäuse (70) festlegbar ist,
wobei das Steckergehäuse (10) einen Montageabschnitt (11) aufweist, mittels welchem der Elektromotor-Anschlussstecker (1) am Gehäuse (70) des Elektromotors (7) festlegbar ist, wobei der Montageabschnitt (11) durch eine Ausnehmung (71) im Gehäuse (70) nach innen in das Gehäuse (70) hineinstehbar ist und derart ausgebildet ist, dass der Elektromotor-Anschlussstecker (1) innen im Gehäuse (70) arretierbar ist, wobei die Verriegelungsfeder (50) für eine Montage des Elektromotor-Anschlusssteckers (1) am Gehäuse (70) derart einsteckbar ist, dass eine Wandung des Gehäuses (70) zwischen der Verriegelungsfeder (50) und einem Absatz (13) des Steckergehäuse (10) einklemmbar ist,
**dadurch gekennzeichnet, dass**
der Montageabschnitt (11) eine als eine Durchgangsausnehmung (12) ausgebildete Verriegelungsausnehmung (12) aufweist, in welche die Verriegelungsfeder (50) für eine Montage des Elektromotor-Anschlusssteckers (1) am Gehäuse (70) einsteckbar ist.

2. Fluiddichtender Elektromotor-Anschlussstecker gemäß Anspruch 1, **dadurch gekennzeichnet, dass** das Steckergehäuse (10) für eine Fluiddichtung der betreffenden elektrischen Leitung (80) und/oder des Elektromotor-Anschlusssteckers (1) gegenüber dem Gehäuse (70),
eine Radialdichtung (20, 21) und eine Axialdichtung (30), oder eine bevorzugt stofflich einstückige Dichteinheit (40), die eine axiale und radiale Fluiddichtung der elektrischen Leitung (80) und/oder des Elektromotor-Anschlusssteckers (1) gegenüber dem Gehäuse (70) gewährleistet, aufweist.

3. Fluiddichtender Elektromotor-Anschlussstecker gemäß einem der vorhergehenden Ansprüche, **dadurch gekennzeichnet, dass** die Verriegelungsfeder (50) wenigstens einen Federabschnitt (52) aufweist, der insbesondere als, bevorzugt bogenförmige, Federlasche (52) ausgebildet ist, und
der jeweilige Federabschnitt (52) in eine betreffende Verriegelungsausnehmung (12) des Montageabschnitts (11) derart einsteckbar ist, dass ein Längsendabschnitt (53, 55) des Federabschnitts (52) am Gehäuse (70) und ein Mittenabschnitt (54) des Federabschnitts (52) innen am Montageabschnitt (11) ansitzt, wobei
der Montageabschnitt (11) bevorzugt derart ausgebildet ist, dass die Verriegelungsfeder (50) mit ihrem jeweiligen Federabschnitt (52) innerhalb des Gehäuses (70) in die betreffende Verriegelungsausnehmung (12) einsteckbar ist.

4. Fluiddichtender Elektromotor-Anschlussstecker gemäß einem der vorhergehenden Ansprüche, **dadurch gekennzeichnet, dass** in einem Verriegelungszustand der Verriegelungsfeder (50), in der Verriegelungsausnehmung (12) eine Arretiereinrichtung (56) der Verriegelungsfeder (50) verriegelnd an einer Arretiereinrichtung (16) der Verriegelungsausnehmung (12) ansitzt, wobei
die Arretiereinrichtung (56) der Verriegelungsfeder (50) bevorzugt eine Arretierlasche (56) oder ein Arretiervorsprung (56), und die Arretiereinrichtung (16) der Verriegelungsausnehmung (12) bevorzugt eine Arretierausnehmung (16) bzw. eine Arretierschulter (16) ist.

5. Fluiddichtender Elektromotor-Anschlussstecker gemäß einem der vorhergehenden Ansprüche, **dadurch gekennzeichnet, dass** die betreffende Verriegelungsausnehmung (12) des Montageabschnitts (11) eine Durchgangsausnehmung (12) ist, wobei die Verriegelungsfeder (50) derart ausgebildet ist, dass sie im Verriegelungszustand im Montageabschnitt (11) mit ihren beiden Längsendabschnitten (53, 55) am Gehäuse (7) abstützbar ist.

6. Fluiddichtender Elektromotor-Anschlussstecker gemäß einem der vorhergehenden Ansprüche, **dadurch gekennzeichnet, dass** das Steckergehäuse (10) derart konzipiert ist, dass eine Dichteinheit (40) zwischen dem Steckergehäuse (10) und einer Seite des Gehäuses (70), insbesondere einer Außenseite des Gehäuses (70), montierbar ist, oder
wenigstens eine Radialdichtung (20) oder eine insbesondere als eine Mattendichtung (21) ausgebildete Radialdichtung (21) im Steckergehäuse (10) aufgenommen ist, wobei die Radialdichtung (20, 21) mittels einer bevorzugt als Fixierplatte (60) ausgebildeten Fixiereinrichtung (60) im Steckergehäuse (10) montiert ist.

7. Fluiddichtender Elektromotor-Anschlussstecker gemäß einem der vorhergehenden Ansprüche, **dadurch gekennzeichnet, dass**
• die Axialdichtung (30) am Absatz (13) des Elektromotor-Anschlusssteckers (1) außerhalb des Montageabschnitts (11) vollständig um den Montageabschnitt (11) umlaufend vorgesehen ist;
• die betreffende Radialdichtung (20, 21) innerhalb des Steckergehäuses (10) vorgesehen ist und die betreffende elektrische Leitung (80) gegenüber dem Steckergehäuse (10) fluiddichtet;
• das Steckergehäuses (10) eine Mehrzahl von Durchgangsausnehmungen (14) aufweist, durch welche die elektrischen Leitungen (80) hindurch erstreckbar sind; und/oder
• der Montageabschnitt (11) eine Mehrzahl von Domen (11) umfasst, die durch eine Mehrzahl von Durchgangsausnehmungen (71) im Gehäuse (70) hindurch steckbar sind.

8. Motor, insbesondere Elektromotor (7) für ein Motorkühlungsgebläse oder ein ABS/ESP eines Kraftfahrzeugs, oder konfektioniertes elektrisches Kabel (8) für einen Motor (7), insbesondere einen Elektromotor (7), **dadurch gekennzeichnet,**
**dass** der Motor (7) oder das konfektionierte elektrische Kabel (8) einen fluiddichtenden Elektromotor-Anschlussstecker (1) nach einem der vorhergehenden Ansprüche aufweist.

## Claims

1. Fluid-sealing electric motor connector for a housing (70) of an electric motor (7), in particular an electric motor (7) of an engine cooling fan or of an ABS/ESP system of a motor vehicle with
a plug connector housing (10) which may be plugged externally onto the housing (70), by means of which at least one electrical line (80) is able to be connected to the electric motor (7) so as to be fluid-sealed relative thereto,
wherein the plug connector housing (10) may be fastened to the housing (70) by means of a locking spring (50), whereby the fluid-sealing electric motor connector (1) may be fastened to the housing (70) in a detachable manner,
wherein the plug connector housing (10) has a mounting portion (11), by means of which the electric motor connector (1) may be fastened to the housing (70) of the electric motor (7), wherein the mounting portion (11) can protrude through a recess (71) in the housing (70) inwardly into the housing (70) and is configured such that the electric motor connector (1) may be blocked inside the housing (70), wherein the locking spring (50) may be inserted for mounting the electric motor connector (1) on the housing (70) such that a wall of the housing (70) may be clamped between the locking spring (50) and a shoulder (13) of the plug connector housing (10), **characterized in that** the mounting portion (11) has a locking recess (12) formed as a through-recess (12), into which the locking spring (50) may be inserted for mounting the electric motor connector (1) on the housing (70).

2. Fluid-sealing electric motor connector according to Claim 1, **characterized in that** the plug connector housing (10) for fluid-sealing the relevant electrical line (80) and/or the electric motor connector (1) relative to the housing (70) has a radial seal (20, 21) and an axial seal (30) or a sealing unit (40) which is preferably made in one piece from the same material, which ensures an axial and radial fluid-seal of the electrical line (80) and/or the electric motor connector (1) relative to the housing (70).

3. Fluid-sealing electric motor connector according to one of the preceding claims, **characterized in that** the locking spring (50) has at least one spring portion (52) which is configured, in particular, as a preferably arcuate spring tab (52), and
the respective spring portion (52) may be inserted into a relevant locking recess (12) of the mounting portion (11), such that a longitudinal end portion (53, 55) of the spring portion (52) is located on the housing (70) and a central portion (54) of the spring portion (52) is located inside on the mounting portion (11), wherein
the mounting portion (11) is preferably configured such that the locking spring (50) may be inserted with its respective spring portion (52) inside the housing (70) into the relevant locking recess (12).

4. Fluid-sealing electric motor connector according to one of the preceding claims, **characterized in that** in a locked state of the locking spring (50) a blocking device (56) of the locking spring (50) bears in a locked manner in the locking recess (12) against a blocking device (16) of the locking recess (12), wherein
the blocking device (56) of the locking spring (50) preferably is a blocking tab (56) or a blocking projection (56) and the blocking device (16) of the locking recess (12) is preferably a blocking recess (16) and/or a blocking shoulder (16).

5. Fluid-sealing electric motor connector according to one of the preceding claims, **characterized in that** the relevant locking recess (12) of the mounting portion (11) is a through-recess (12), wherein the locking spring (50) is configured such that it may be supported in the locked state in the mounting portion (11) with the two longitudinal end portions (53, 55) thereof on the housing (7).

6. Fluid-sealing electric motor connector according to one of the preceding claims, **characterized in that** the plug connector housing (10) is designed such that a sealing unit (40) may be mounted between the plug connector housing (10) and one side of the housing (70), in particular an outer face of the housing (70), or
at least one radial seal (20) or a radial seal (21) configured in particular as a mat seal (21), is received in the plug connector housing (10), wherein the radial seal (20, 21) is mounted in the plug connector housing (10) by means of a fixing device (60) preferably configured as a fixing plate (60).

7. Fluid-sealing electric motor connector according to one of the preceding claims, **characterized in that**
• the axial seal (30) on the shoulder (13) of the electric motor connector (1) is provided outside the mounting portion (11) completely encircling the mounting portion (11);
• the relevant radial seal (20, 21) is provided inside the plug connector housing (10) and fluid-seals the relevant electrical line (80) relative to the plug connector housing (10);
• the plug connector housing (10) has a plurality of through-recesses (14), through which the electrical lines (80) are able to extend; and/or
• the mounting portion (11) comprises a plurality of domes (11) which may be inserted through a plurality of through-recesses (71) in the housing (70).

8. Motor, in particular electric motor (7) for an engine cooling fan or of an ABS/ESP system of a motor vehicle, or a ready-to-use electrical cable (8) for a motor (7), in particular an electric motor (7), **characterized in that** the motor (7) or the ready-to-use electrical cable (8) has a fluid-sealing electric motor connector (1) according to one of the preceding claims.

## Revendications

1. Fiche étanche aux fluides pour le raccordement d'un moteur électrique, prévue pour le boîtier (70) d'un moteur électrique (7), en particulier d'un moteur électrique (7) d'un ventilateur de refroidissement de moteur ou d'un système ABS/ESP d'un véhicule automobile, la fiche présentant
un boîtier (10) de fiche apte à être enfiché à l'extérieur sur le boîtier (70) et au moyen duquel au moins un conducteur électrique (80) peut être relié au moteur électrique (7) de manière étanche aux fluides,
le boîtier (10) de fiche pouvant être fixé sur le boîtier (70) au moyen d'un ressort de verrouillage (50),
la fiche (1) étanche aux fluides de raccordement du moteur électrique pouvant être fixée de nouveau de manière libérable sur le boîtier (70),
le boîtier (10) de fiche présentant une section de montage (11) au moyen de laquelle la fiche (1) de raccordement du moteur électrique peut être fixée sur le boîtier (70) du moteur électrique (7),
la section de montage (11) étant formée d'une découpe (71) ménagée dans le boîtier (70) à l'intérieur du boîtier (70) et étant configurée de telle sorte que la fiche (1) de raccordement de moteur électrique puisse être bloquée à l'intérieur du boîtier (70),
le ressort de verrouillage (50) permettant le montage de la fiche (1) de raccordement du moteur électrique sur le boîtier (70) pouvant être enfiché en serrant une paroi du boîtier (70) entre le ressort de verrouillage (50) et un appendice (13) du boîtier (10) de la fiche,
**caractérisée en ce que**
la section de montage (11) présente une découpe de verrouillage (12) configurée comme découpe de passage (12) dans laquelle le ressort de verrouillage (50) peut être enfiché pour le montage de la fiche (1) de raccordement de moteur électrique sur le boîtier (70).

2. Fiche étanche aux fluides pour le raccordement d'un moteur électrique selon la revendication 1, **caractérisée en ce que** pour assurer l'étanchéité aux fluides du conducteur électrique (80) et/ou de la fiche (1) de raccordement de moteur électrique par rapport au boîtier (70), le boîtier (10) de la fiche présente un joint d'étanchéité radial (20, 21), un joint d'étanchéité axial (30) ou une unité d'étanchéité (40), de préférence d'un seul tenant et en une seule matière, qui assurent une étanchéité axiale et radiale du conducteur électrique (80) et/ou de la fiche (1) de raccordement de moteur électrique vis-à-vis du boîtier (70).

3. Fiche étanche aux fluides pour le raccordement d'un moteur électrique selon l'une des revendications précédentes, **caractérisée en ce que** le ressort de verrouillage (50) présente au moins une section de ressort (52) configurée en particulier comme languette élastique (52), de préférence en forme d'arc de cercle, **en ce que** la section de ressort (52) peut être enfichée dans une découpe de verrouillage (12) appropriée de la section de montage (11) de telle sorte qu'une section (53, 55) d'extrémité longitudinale de la section de ressort (52) repose contre le boîtier (70) et une section centrale (54) de la section de ressort (52) à l'intérieur de la section de montage (11) et **en ce que** la section de montage (11) est configurée de préférence de telle sorte que le ressort de verrouillage (50) puisse être enfiché par la section de ressort (52) dans la découpe de verrouillage (12) concernée à l'intérieur du boîtier (70).

4. Fiche étanche aux fluides pour le raccordement d'un moteur électrique selon l'une des revendications précédentes, **caractérisée en ce que** lorsque le ressort de verrouillage (50) est en position de verrouillage, un dispositif de blocage (56) du ressort de verrouillage (50) repose de manière verrouillée dans la découpe de verrouillage (12) sur un dispositif de blocage (16) de la découpe de verrouillage (12) et **en ce que** le dispositif de blocage (56) du ressort de verrouillage (50) est de préférence une patte de blocage (56) ou une saillie de blocage (56) et le dispositif de blocage (16) de la découpe de verrouillage (12) est de préférence une découpe de blocage (16) ou un épaulement de blocage (16).

5. Fiche étanche aux fluides pour le raccordement d'un moteur électrique selon l'une des revendications précédentes, **caractérisée en ce que** la découpe de verrouillage (12) de la section de montage (11) est une découpe de passage (12), le ressort de verrouillage (50) étant configuré de manière à pouvoir s'appuyer par ses deux sections d'extrémité longitudinales (53, 55) sur le boîtier (7) lorsqu'il est en position de verrouillage dans la section de montage (11).

6. Fiche étanche aux fluides pour le raccordement d'un moteur électrique selon l'une des revendications précédentes, **caractérisée en ce que** le boîtier de fiche (10) est conçu de manière à permettre le montage d'une unité d'étanchéité (40) entre le boîtier de fiche (10) et un côté du boîtier (70), en particulier un côté extérieur du boîtier (70), ou **en ce qu'**au moins une étanchéité radiale (20) ou une étanchéité radiale (21) configurées comme étanchéité matée (21) sont reçues dans le boîtier de fiche (10), l'étanchéité radiale (20, 21) étant montée dans le boîtier de fiche (10) au moyen d'un dispositif de fixation (60) configuré de préférence comme plaque de fixation (60).

7. Fiche étanche aux fluides pour le raccordement d'un moteur électrique selon l'une des revendications précédentes, **caractérisée en ce que** l'étanchéité axiale (30) est prévue à l'extérieur de la section de montage (11) autour de toute la section de montage (11), sur l'appendice (13) de la fiche (1) de raccordement de moteur électrique, **en ce que** le joint d'étanchéité radial concerné (20, 21) est prévu à l'intérieur du boîtier de fiche (10) et assure l'étanchéité aux fluides du conducteur électrique (80) concerné vis-à-vis du boîtier de fiche (10), **en ce que** le boîtier de fiche (10) présente plusieurs découpes de passage (14) par lesquelles les conducteurs électriques (80) peuvent être enfichés et/ou **en ce que** la section de montage (11) comporte plusieurs dômes (11) qui peuvent être traversés par plusieurs découpes de passage (71) ménagées dans le boîtier (70).

8. Moteur, en particulier moteur électrique (7) pour le ventilateur de refroidissement du moteur ou le système ABS/ESP d'un véhicule automobile, ou câble électrique (8) confectionné pour un moteur (7), en particulier un moteur électrique (7),
**caractérisés en ce que**
le moteur (7) ou le câble électrique confectionné (8) présentent une fiche (1) étanche aux fluides de raccordement de moteur électrique selon l'une des revendications précédentes.
